# EUROPÄISCHE PATENTSCHRIFT

(11) **EP 2 681 021 B1**
(45) Veröffentlichungstag und Bekanntmachung des Hinweises auf die Patenterteilung: **24.02.2016**
(21) Anmeldenummer: 12719253.2
(22) Anmeldetag: 02.03.2012
(51) Int. Cl.: B27B 17/02

(54) **WERKZEUGMASCHINENSYSTEM**
POWER TOOL SYSTEM
SYSTÈME DE MACHINE-OUTIL

(30) Priorität: 03.03.2011 DE 102011005015
(43) Veröffentlichungstag der Anmeldung: 08.01.2014
(73) Patentinhaber: Robert Bosch GmbH, 70469 Stuttgart (DE)
(72) Erfinder: FUCHS, Rudolf, 73765 Neuhausen (DE)
(86) Internationale Anmeldenummer: PCT/EP2012/000953
(87) Internationale Veröffentlichungsnummer: WO 2012/116841

(56) Entgegenhaltungen:
- CH-A- 221 661
- DE-A1-102006 062 001
- GB-A- 2 042 974
- GB-A- 2 162 463
- US-A- 2 774 395
- US-A- 2 924 110
- US-A- 3 537 347
- US-A- 4 382 334
- US-A- 4 821 415

## Beschreibung

### Stand der Technik

Es sind bereits Werkzeugmaschinensysteme bekannt, die eine Werkzeugmaschinentrennvorrichtung und eine tragbare Werkzeugmaschine aufweisen. Die Werkzeugmaschinentrennvorrichtung umfasst hierbei einen Schneidstrang und eine Führungseinheit, die zusammen mit dem Schneidstrang ein geschlossenes System bildet. Die tragbare Werkzeugmaschine weist eine mit dem Schneidstrang koppelbare Motoreinheit auf.

### Offenbarung der Erfindung

Die Erfindung geht aus von einem Werkzeugmaschinensystem gemäß dem Oberbegriff des Patentanspruchs 1 mit zumindest einer Werkzeugmaschinentrennvorrichtung, die zumindest einen Schneidstrang und zumindest eine Führungseinheit, die zumindest zusammen mit dem Schneidstrang ein geschlossenes System bildet, umfasst, und mit zumindest einer tragbaren Werkzeugmaschine, die eine mit dem Schneidstrang koppelbare Motoreinheit aufweist. Ein derartiges Werkzeugmaschinensystem geht beispielsweise aus der US 4 382 334 A hervor.

Zumindest in einem montierten Zustand verläuft eine Motoreinheitslängsachse der Motoreinheit zumindest im Wesentlichen senkrecht zu einer Längsachse der Führungseinheit. Die Erfindung sieht ein Werkzeugmaschinensystem gemäß dem Patentanspruch 1 vor. Unter einem "Schneidstrang" soll hier insbesondere eine Einheit verstanden werden, die dazu vorgesehen ist, einen atomaren Zusammenhalt eines zu bearbeitenden Werkstücks örtlich aufzuheben, insbesondere mittels eines mechanischen Abtrennens und/oder mittels eines mechanischen Abtragens von Werkstoffteilchen des Werkstücks. Bevorzugt ist der Schneidstrang dazu vorgesehen, das Werkstück in zumindest zwei physikalisch voneinander getrennte Teile zu separieren und/oder zumindest teilweise Werkstoffteilchen des Werkstücks ausgehend von einer Oberfläche des Werkstücks abzutrennen und/oder abzutragen. Besonders bevorzugt wird der Schneidstrang in zumindest einem Betriebszustand umlaufend bewegt, insbesondere entlang eines Umfangs der Führungseinheit. Unter einer "Führungseinheit" soll hier insbesondere eine Einheit verstanden werden, die dazu vorgesehen ist, eine Zwangskraft zumindest entlang einer Richtung senkrecht zu einer Schneidrichtung des Schneidstrangs auf den Schneidstrang auszuüben, um eine Bewegungsmöglichkeit des Schneidstrangs entlang der Schneidrichtung vorzugeben. In diesem Zusammenhang soll unter "vorgesehen," insbesondere speziell ausgelegt und/oder speziell ausgestattet verstanden werden. Bevorzugt weist die Führungseinheit zumindest ein Führungselement auf, insbesondere eine Führungsnut, durch das der Schneidstrang geführt wird. Bevorzugt ist der Schneidstrang, in einer Schneidebene betrachtet, entlang eines gesamten Umfangs der Führungseinheit durch die Führungseinheit mittels des Führungselements, insbesondere der Führungsnut, geführt. Vorzugsweise ist die Führungseinheit als Schwert ausgebildet. Der Begriff "Schwert" soll hier insbesondere eine geometrische Form definieren, die, in der Schneidebene betrachtet, eine in sich geschlossene Außenkontur aufweist, die zumindest zwei zueinander parallel verlaufende Geraden und zumindest zwei jeweils sich zugewandte Enden der Geraden miteinander verbindende Verbindungsabschnitte, insbesondere Kreisbögen, umfasst. Somit weist die Führungseinheit eine geometrische Form auf, die sich, in der Schneidebene betrachtet, aus einem Rechteck und zumindest zwei an sich gegenüberliegenden Seiten des Rechtecks angeordneten Kreissektoren zusammensetzt.

Der Begriff "schneidebene" soll hier insbesondere eine Ebene definieren, in der der Schneidstrang in zumindest einem Betriebszustand entlang eines Umfangs der Führungseinheit in zumindest zwei zueinander entgegengesetzt gerichtete Schneidrichtungen relativ zur Führungseinheit bewegt wird. Bevorzugt ist die Schneidebene bei einer Bearbeitung eines Werkstücks zumindest im Wesentlichen quer zu einer bearbeitenden Werkstückoberfläche ausgerichtet. Unter "zumindest im Wesentlichen quer" soll hier insbesondere eine Ausrichtung einer Ebene und/oder einer Richtung relativ zu einer weiteren Ebene und/oder einer weiteren Richtung verstanden werden, die bevorzugt von einer parallelen Ausrichtung der Ebene und/oder der Richtung relativ zu der weiteren Ebene und/oder der weiteren Richtung abweicht. Es ist jedoch auch denkbar, dass die Schneidebene bei einer Bearbeitung eines Werkstücks zumindest im Wesentlichen parallel zu einer bearbeitenden Werkstückoberfläche ausgerichtet ist, insbesondere bei einer Ausbildung des Schneidstrangs als Schleifmittel usw. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einer "Schneidrichtung" soll hier insbesondere eine Richtung verstanden werden, entlang der der Schneidstrang zur Erzeugung eines Schneidspalts und/oder zur Abtrennung und/oder zur Abtragung von Werkstoffteilchen eines zu bearbeitenden Werkstücks in zumindest einem Betriebszustand infolge einer Antriebskraft und/oder eines Antriebsmoments, insbesondere in der Führungseinheit, bewegt wird. Bevorzugt wird der Schneidstrang in einem Betriebszustand entlang der Schneidrichtung relativ zur Führungseinheit bewegt. Der Begriff "geschlossenes System" soll hier insbesondere ein System definieren, das zumindest zwei Komponenten umfasst, die mittels eines Zusammenwirkens in einem demontierten Zustand des Systems von einem dem System übergeordneten System, wie beispielsweise einer Werkzeugmaschine, eine Funktionalität beibehalten und/oder die im demontierten Zustand unverlierbar miteinander verbunden sind. Bevorzugt sind die zumindest zwei Komponenten des geschlossenen Systems für einen Bediener zumindest im Wesentlichen unlösbar miteinander verbunden. Unter "zumindest im Wesentlichen unlösbar" soll hier insbesondere eine Verbindung von zumindest zwei Bauteilen verstanden werden, die lediglich unter der Zuhilfenahme von Trennwerkzeugen, wie beispielsweise einer Säge, insbesondere einer mechanischen Säge usw., und/oder chemischen Trennmitteln, wie beispielsweise Lösungsmittel usw., voneinander trennbar sind.

Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 40 kg, bevorzugt kleiner als 10 kg und besonders bevorzugt kleiner als 5 kg. Der Begriff "Motoreinheit" soll hier insbesondere eine Einheit definieren, die dazu vorgesehen ist, Kräfte und/oder Drehmomente zu einem Antrieb des Schneidstrangs zu erzeugen. Bevorzugt wird zur Erzeugung von Kräften und/oder Drehmomenten mittels der Motoreinheit thermische Energie, chemische Energie und/oder elektrische Energie in Bewegungsenergie umgewandelt. Insbesondere ist die Motoreinheit direkt und/oder indirekt mit dem Schneidstrang koppelbar ausgebildet. Besonders bevorzugt umfasst die Motoreinheit zumindest einen Stator und zumindest einen Rotor, der zumindest eine Ankerwelle aufweist. Unter einer "Motoreinheitslängsachse" soll hier insbesondere eine Achse der Motoreinheit verstanden werden, die zumindest im Wesentlichen koaxial zu einer Rotationsachse einer Antriebswelle der Motoreinheit, insbesondere einer Ankerwelle der Motoreinheit, verläuft. Die Motoreinheit weist entlang der Motoreinheitslängsachse eine maximale Abmessung auf. Der Begriff "Längsachse" soll hier insbesondere eine Achse definieren, entlang der ein Bauteil, insbesondere die Führungseinheit, eine maximale Abmessung aufweist. Die Längsachse verläuft bevorzugt zumindest im Wesentlichen parallel zu den zwei Geraden der Außenkontur der Führungseinheit. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Mittels der erfindungsgemäßen Ausgestaltung des Werkzeugmaschinensystems kann vorteilhaft eine kompakte Werkzeugmaschine erreicht werden.

Des Weiteren wird vorgeschlagen, dass die tragbare Werkzeugmaschine zumindest eine Auflageeinheit zur Auflage auf ein Werkstück aufweist, durch die sich die Längsachse der Führungseinheit in einem montierten Zustand zumindest im Wesentlichen senkrecht zu einer Auflagefläche der Auflageeinheit hindurch erstreckt. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Unter einer "Auflageeinheit" soll hier insbesondere eine Einheit verstanden werden, die während einer Bearbeitung eines Werkstücks mittels der tragbaren Werkzeugmaschine bei einer ordnungsgemäßen Handhabung der tragbaren Werkzeugmaschine, auf dem Werkstück aufliegt, insbesondere mit der Auflagefläche der Auflageeinheit, und die dazu vorgesehen ist, die tragbare Werkzeugmaschine während einer Bearbeitung des Werkstücks auf dem Werkstück abzustützen. Besonders bevorzugt ist die Auflageeinheit als Gleitschuh und/oder als Grundplatte ausgebildet. Vorzugsweise gleitet die tragbare Werkzeugmaschine während einer Bearbeitung des Werkstücks mittels der Auflageeinheit, insbesondere mit der Auflagefläche der Auflageeinheit, auf einer Oberfläche des zu bearbeitenden Werkstücks. Es kann vorteilhaft eine Führung der tragbaren Werkzeugmaschine während einer Bearbeitung eines Werkstücks erreicht werden. Ferner kann vorteilhaft ein hoher Bedienkomfort für einen Bediener bei einer Bearbeitung eines Werkstücks mittels der tragbaren Werkzeugmaschine erreicht werden.

Die Motoreinheitslängsachse der Motoreinheit und die Längsachse der Führungseinheit sind in einem montierten Zustand zumindest im Wesentlichen in einer gemeinsamen Ebene angeordnet. Unter "zumindest im Wesentlichen in einer gemeinsamen Ebene angeordnet" soll hier insbesondere eine Anordnung der Motoreinheitslängsachse und der Längsachse verstanden werden, so dass die Motoreinheitslängsachse und die Längsachse in wenigstens einem Bereich einen Abstand kleiner als 15 mm, vorzugsweise kleiner als 10 mm und besonders bevorzugt kleiner als 5 mm aufweisen, und sich insbesondere in zumindest einem Punkt schneiden. Vorzugsweise spannen die Motoreinheitslängsachse und die Längsachse die gemeinsame Ebene auf. Es kann vorteilhaft ein eine kompakte Werkzeugmaschine erreicht werden.

Erfindungsgemäß wird vorgeschlagen, dass die tragbare Werkzeugmaschine eine Getriebeeinheit aufweist, die als Winkelgetriebe ausgebildet ist. Das Winkelgetriebe kann hierbei beispielsweise als Kegelradgetriebe, als Schneckenradgetriebe, als Kronenradgetriebe und/oder als andere, einem Fachmann als sinnvoll erscheinende Winkelgetriebearten ausgebildet sein. Bevorzugt ist die Motoreinheit zur Übertragung von Kräften und/oder Drehmomenten zum Antrieb des Schneidstrangs mittels des Winkelgetriebes mit dem Schneidstrang gekoppelt. Besonders bevorzugt weist das Winkelgetriebe zumindest eine Abtriebswelle zum Antrieb des Schneidstrangs auf, die drehfest mit einem Zahnrad, wie beispielsweise einem Tellerrad, einem Schneckenrad und/oder einem Kronenrad usw., drehfest verbunden ist. Bevorzugt ist die Abtriebswelle mittels einer formschlüssigen und/oder kraftschlüssigen Verbindung mit dem Zahnrad des Winkelgetriebes drehfest verbunden. Es ist jedoch auch denkbar, dass die Abtriebswelle einstückig mit dem Zahnrad ausgebildet ist. Vorzugsweise wird die Abtriebswelle von einer zur Antriebswelle der Motoreinheit verschiedenen Welle gebildet. Es kann konstruktiv einfach eine Übertragung von Kräften und/oder Drehmomenten, die mittels der Motoreinheit erzeugt werden, zum Antrieb des Schneidstrangs an den Schneidstrang übertragen werden.

Vorzugsweise weist die Werkzeugmaschinentrennvorrichtung ein Drehmomentübertragungselement auf, das zumindest teilweise in der Führungseinheit gelagert ist. Bevorzugt ist das Drehmomentübertragungselement zumindest teilweise entlang zumindest einer Richtung von Außenwänden der Führungseinheit umgeben. Bevorzugt weist das Drehmomentübertragungselement eine konzentrische Kopplungsausnehmung auf, in die ein Ritzel der Motoreinheit und/oder ein Zahnrad und/oder eine verzahnte Welle der Getriebeeinheit in einem montierten Zustand eingreifen kann. Die Kopplungsausnehmung wird hierbei bevorzugt von einem Innensechskant gebildet. Es ist jedoch auch denkbar, dass die Kopplungsausnehmung eine andere, einem Fachmann als sinnvoll erscheinende Ausgestaltung aufweist. Mittels der erfindungsgemäßen Ausgestaltung der Werkezugmaschinentrennvorrichtung kann konstruktiv einfach ein geschlossenes System erreicht werden, das komfortabel von einem Bediener an einer dazu vorgesehenen Werkzeugmaschine montierbar ist. Es kann somit vorteilhaft auf eine Einzelmontage von Komponenten, wie beispielsweise des Schneidstrangs, der Führungseinheit und des Drehmomentübertragungselements, durch den Bediener zum Gebrauch der erfindungsgemäßen Werkzeugmaschinentrennvorrichtung verzichtet werden.

Zudem wird vorgeschlagen, dass das Drehmomentübertragungselement zumindest in einem ungekoppelten Zustand zumindest quer zu einer Schneidrichtung des Schneidstrangs und/oder entlang der Schneidrichtung in der Führungseinheit beweglich angeordnet ist. Unter einem "ungekoppelten Zustand" soll hier insbesondere ein Zustand des Drehmomentübertragungselements und/oder der Werkzeugmaschinentrennvorrichtung verstanden werden, in dem das Drehmomentübertragungselement von einem Ritzel der Motoreinheit und/oder einem Zahnrad und/oder einer verzahnten Welle der Getriebeeinheit entkoppelt ist und/oder die Werkzeugmaschinentrennvorrichtung von einer Kopplungsvorrichtung und/oder von einer Werkzeugaufnahme der tragbaren Werkzeugmaschine entkoppelt ist. Der Ausdruck "beweglich angeordnet" soll hier insbesondere eine Anordnung des Drehmomentübertragungselements in der Führungseinheit definieren, wobei das Drehmomentübertragungselement, insbesondere entkoppelt von einer elastischen Verformung des Drehmomentübertragungselements, eine Bewegungsmöglichkeit entlang zumindest einer Strecke größer als 0,1 mm aufweist, bevorzugt größer als 1 mm. Es können vorteilhaft bereits vorhandene Bauteile der tragbaren Werkzeugmaschine, wie beispielsweise ein Ritzel der Motoreinheit und/oder ein Zahnrad und/oder eine verzahnte Welle der Getriebeeinheit, zur Zentrierung und/oder Lagerung des Drehmomentübertragungselements in einem gekoppelten Zustand des Drehmomentübertragungselements genutzt werden. Es kann zudem vorteilhaft ein Spannen des Schneidstrangs in einem gekoppelten Zustand des Drehmomentübertragungselements erreicht werden.

Vorteilhafterweise weist der Schneidstrang zumindest ein Schneidenträgerelement auf, das auf einer einem Drehmomentübertragungselement der Werkzeugmaschinentrennvorrichtung zugewandten Seite des Schneidenträgerelements zumindest eine Ausnehmung aufweist, in die das Drehmomentübertragungselement in zumindest einem Betriebszustand zum Antrieb des Schneidstrangs eingreift. Das Drehmomentübertragungselement ist hierbei bevorzugt als Zahnrad ausgebildet, das entlang einer in einer sich senkrecht zur Rotationsachse erstreckenden Ebene verlaufenden Umfangsrichtung eine Vielzahl an Zähnen zum Antrieb des Schneidstrangs aufweist. Die Ausnehmung des Schneidenträgerelements ist bevorzugt korrespondierend mit einer Außenkontur der Zähne des als Zahnrad ausgebildeten Drehmomentübertragungselements ausgebildet. Es ist jedoch auch denkbar, dass das Drehmomentübertragungselement und/oder das Schneidenträgerelement eine andere, einem Fachmann als sinnvoll erscheinende Ausgestaltung aufweist. Es können konstruktiv einfach Kräfte und/oder Drehmomente zum Antrieb des Schneidstrangs an das Schneidenträgerelement übertragen werden.

Des Weiteren wird vorgeschlagen, dass das Schneidenträgerelement zumindest auf der dem Drehmomentübertragungselement zugewandten Seite zumindest im Wesentlichen kreisbogenförmig ausgebildet ist. Die dem Drehmomentübertragungselement in einem montierten Zustand zugewandte Seite des Schneidenträgerelements ist insbesondere in zumindest einem Teilbereich, zwischen einer Mittelachse des in und/oder am Schneidenträgerelement angeordneten Verbindungselements und einer Mittelachse einer Verbindungsausnehmung des Schneidenträgerelements zur Aufnahme des Verbindungselements betrachtet, kreisbogenförmig ausgestaltet. Bevorzugt ist der kreisbogenförmige Teilbereich angrenzend an die Ausnehmung, in die das Drehmomentübertragungselement eingreift, ausgebildet. Besonders bevorzugt weist der kreisbogenförmige Teilbereich einen Radius auf, der zumindest im Wesentlichen einem Radius einer Umlenkkontur der Führungseinheit, insbesondere einer Umlenkkontur eines an einem konvexen Ende angeordneten Führungselements der Führungseinheit, entspricht. Vorzugsweise ist die dem Drehmomentübertragungselement in einem montierten Zustand zugewandte Seite des Schneidenträgerelements, insbesondere der Teilbereich, konkav ausgebildet. Es kann vorteilhaft eine Umlenkung des Schneidenträgerelements in einem Betrieb der Werkzeugmaschinentrennvorrichtung erreicht werden. Ferner kann vorteilhaft ein kleiner Umlenkradius bei einer Umlenkung des Schneidenträgerelements realisiert werden.

Ein Ausführungsbeispiel zeigt eine Werkzeugmaschinentrennvorrichtung, insbesondere eine Handwerkzeugmaschinentrennvorrichtung, für ein erfindungsgemäßes Werkzeugmaschinensystem, mit zumindest einem Schneidstrang und mit zumindest einer Führungseinheit, die zumindest zusammen mit dem Schneidstrang ein geschlossenes System bildet. Es kann vorteilhaft ein vielseitig einsetzbares Werkzeug zur Bearbeitung von Werkstücken erreicht werden.

Zudem zeigt ein Ausführungsbeispiel eine tragbare Werkzeugmaschine für ein erfindungsgemäßes Werkzeugmaschinensystem, mit einer Kopplungsvorrichtung zur formschlüssigen und/oder kraftschlüssigen Kopplung zumindest mit einer Werkzeugmaschinentrennvorrichtung. Es kann vorteilhaft eine tragbare Werkzeugmaschine erreicht werden, die besonders vorteilhaft für ein breites Einsatzspektrum geeignet ist.

Die Werkzeugmaschinentrennvorrichtung und/oder die tragbare Werkzeugmaschine sollen hierbei nicht auf die oben beschriebene Anwendung und Ausführungsform beschränkt sein. Insbesondere kann die Werkzeugmaschinentrennvorrichtung und/oder die tragbare Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes tragbares Werkzeugmaschinensystem mit einer Werkzeugmaschinentrennvorrichtung in einer schematischen Darstellung,
- Fig. 2: eine Detailansicht einer Anordnung einer Motoreinheit des erfindungsgemäßen Werkzeugmaschinensystems und der Werkzeugmaschinentrennvorrichtung in einer schematischen Darstellung,
- Fig. 3: eine Detailansicht der Werkzeugmaschinentrennvorrichtung in einer schematischen Darstellung,
- Fig. 4: eine Schnittansicht entlang der Linie IV-IV aus Figur 3 der Werkzeugmaschinentrennvorrichtung in einer schematischen Darstellung,
- Fig. 5: eine Detailansicht von Schneidenträgerelementen eines Schneidstrangs der Werkzeugmaschinentrennvorrichtung in einer schematischen Darstellung,
- Fig. 6: eine weitere Detailansicht eines der Schneidenträgerelemente des Schneidstrangs der Werkzeugmaschinentrennvorrichtung in einer schematischen Darstellung und
- Fig. 7: eine Detailansicht einer Anordnung der Schneidenträgerelemente in einer Führungseinheit der Werkzeugmaschinentrennvorrichtung in einer schematischen Darstellung.

### Beschreibung des Ausführungsbeispiels

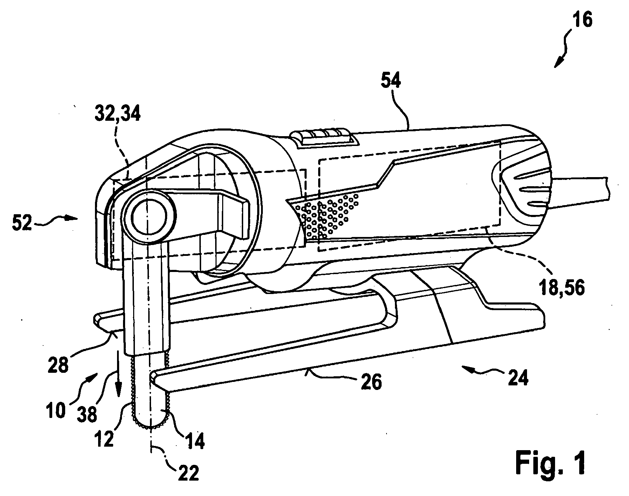

Figur 1 zeigt eine tragbare Werkzeugmaschine 16 mit einer Werkzeugmaschinentrennvorrichtung 10, die zusammen ein Werkzeugmaschinensystem bilden. Die tragbare Werkzeugmaschine 16 weist eine Kopplungsvorrichtung 52 zur formschlüssigen und/oder kraftschlüssigen Kopplung mit der Werkzeugmaschinentrennvorrichtung 10 auf. Die Kopplungsvorrichtung 52 kann hierbei als Bajonettverschluss und/oder als andere, einem Fachmann als sinnvoll erscheinende Kopplungsvorrichtung ausgebildet sein. Ferner weist die tragbare Werkzeugmaschine 16 ein Werkzeugmaschinengehäuse 54 auf, das eine Motoreinheit 18 und eine Getriebeeinheit 32 der tragbaren Werkzeugmaschine 16 umschließt. Die Motoreinheit 18 und die Getriebeeinheit 32 sind zur Erzeugung eines auf die Werkzeugmaschinentrennvorrichtung 10 übertragbaren Antriebsmoments auf eine, einem Fachmann bereits bekannte Art und Weise wirkungsmäßig miteinander verbunden. Hierbei sind die Motoreinheit 18 und/oder die Getriebeeinheit 32 dazu vorgesehen, in einem montierten Zustand mittels der Kopplungsvorrichtung 52 mit einem Schneidstrang 12 der Werkzeugmaschinentrennvorrichtung 10 gekoppelt zu werden. Die Getriebeeinheit 32 der tragbaren Werkzeugmaschine 16 ist als Winkelgetriebe 34 ausgebildet. Die Motoreinheit 18 ist als Elektromotoreinheit 56 ausgebildet. Es ist jedoch auch denkbar, dass die Motoreinheit 18 eine andere, einem Fachmann als sinnvoll erscheinende Ausgestaltung aufweisen. Die Motoreinheit 18 ist dazu vorgesehen, den Schneidstrang 12 der Werkzeugmaschinentrennvorrichtung 10 in zumindest einem Betriebszustand mit einer Schnittgeschwindigkeit kleiner als 6 m/s anzutreiben. Hierbei weist die tragbare Werkzeugmaschine 16 zumindest einen Betriebsmodus auf, in dem ein Antrieb des Schneidstrangs 12 in einer Führungseinheit 14 der Werkzeugmaschinentrennvorrichtung 10 entlang einer Schneidrichtung 38 des Schneidstrangs 12 mit einer Schnittgeschwindigkeit kleiner als 6 m/s ermöglicht wird. Ferner umfasst die tragbare Werkzeugmaschine 18 eine Auflageeinheit 24 zur Auflage auf ein mittels der tragbaren Werkzeugmaschine 18 zu bearbeitendes Werkstück (hier nicht näher dargestellt). Die Auflageeinheit 24 ist als Gleitschuh und/oder als Grundplatte ausgebildet, mittels dem und/oder derer die tragbare Werkzeugmaschine 16 während einer Bearbeitung eines Werkstücks auf dem Werkstück gleitet und/oder abgestützt wird.

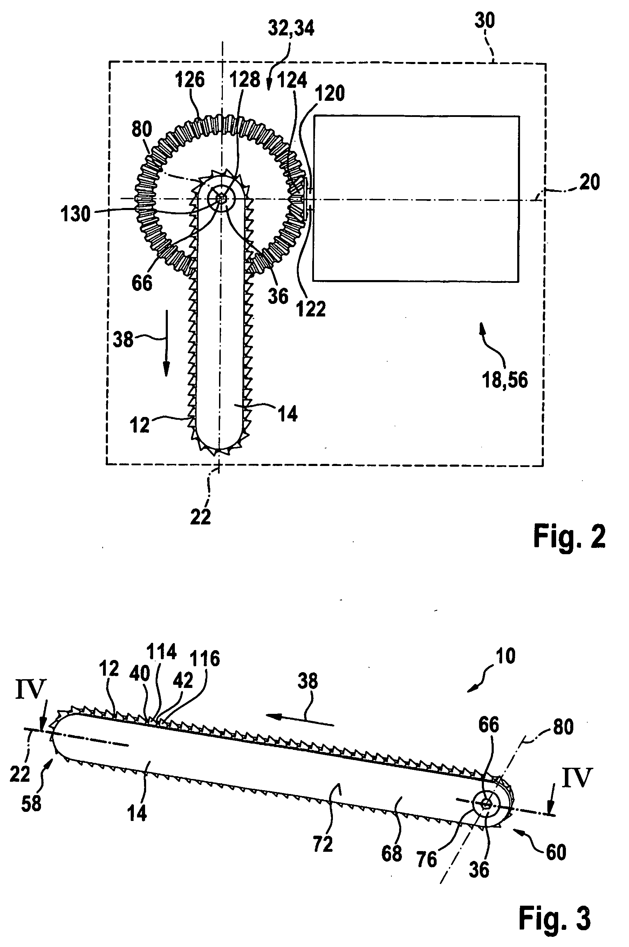

Figur 2 zeigt eine Detailansicht einer Anordnung der Motoreinheit 18 der tragbaren Werkzeugmaschine 16 relativ zur Werkzeugmaschinentrennvorrichtung 10 in einem montierten Zustand der Werkzeugmaschinentrennvorrichtung 10. In einem montierten Zustand der Werkzeugmaschinentrennvorrichtung 10 verläuft eine Motoreinheitslängsachse 20 der Motoreinheit 18 zumindest im Wesentlichen senkrecht zu einer Längsachse 22 der Führungseinheit 14. Die Motoreinheitslängsachse 20 verläuft hierbei koaxial zu einer Antriebswelle 120 der Motoreinheit 18. Die Antriebswelle 120 ist als Ankerwelle 122 ausgebildet. Die Längsachse 22 der Führungseinheit 14 verläuft, in einer Schneidebene des Schneidstrangs 12 betrachtet, zumindest im Wesentlichen parallel zu zwei zumindest im Wesentlichen parallel verlaufenden Geraden einer Außenkontur der Führungseinheit 14. Ferner erstreckt sich die Längsachse 22 der Führungseinheit 14 in einem montierten Zustand zumindest im Wesentlichen senkrecht zumindest zu einer Auflagefläche 26, 28 der Auflageeinheit 24 durch die Auflageeinheit 24 hindurch. Die Motoreinheitslängsachse 20 der Motoreinheit 18 und die Längsachse 22 der Führungseinheit 14 sind hierbei in einem montierten Zustand zumindest im Wesentlichen in einer gemeinsamen Ebene 30 angeordnet.

Zum Antrieb des Schneidstrangs 12 bzw. zur Übertragung von Kräften und/oder Drehmomenten von der Motoreinheit 18 an den Schneidstrang 12 weist die Ankerwelle 122 ein Ritzel 124 auf. Das Ritzel 124 ist drehfest mit der Ankerwelle 122 verbunden. In einem Betriebszustand kämmt das Ritzel 124 mit einem Zahnrad 126 der Getriebeeinheit 32. Das Zahnrad 126 ist hierbei als Tellerrad ausgebildet. Es ist jedoch auch denkbar, dass das Zahnrad 126 eine andere, einem Fachmann als sinnvoll erscheinende Ausgestaltung aufweist. Das Zahnrad ist drehfest mit einer Abtriebswelle 128 verbunden. Die Abtriebswelle 128 weist an einer dem Schneidstrang 12 in einem montierten Zustand zugewandten Seite ein verzahntes Ende 130 auf, das dazu vorgesehen ist, zum Antrieb des Schneidstrangs 12 direkt und/oder indirekt mit dem Schneidstrang 12 gekoppelt zu werden. Das verzahnte Ende 130 ist als Sechskant ausgebildet.

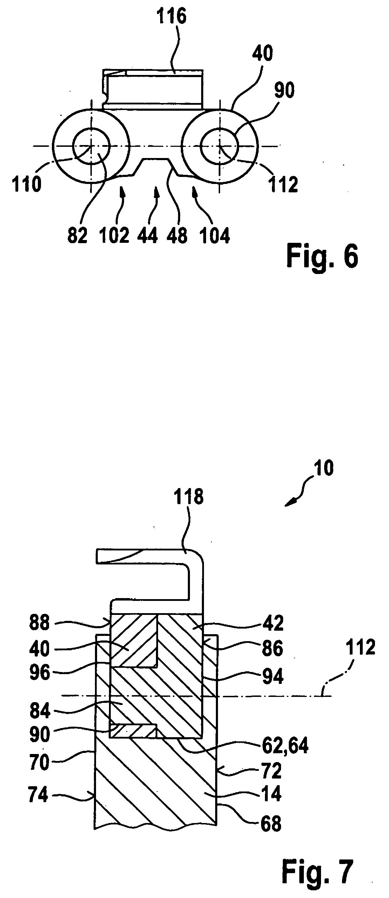

Figur 3 zeigt die Werkzeugmaschinentrennvorrichtung 10 in einem von der Kopplungsvorrichtung 52 der tragbaren Werkzeugmaschine 16 entkoppelten Zustand. Die Werkzeugmaschinentrennvorrichtung 10 weist den Schneidstrang 12 und die Führungseinheit 14 auf, die zusammen ein geschlossenes System bilden. Die Führungseinheit 14 ist als Schwert ausgebildet. Ferner weist die Führungseinheit 14, in der Schneidebene des Schneidstrangs 12 betrachtet, zumindest zwei konvex ausgebildete Enden 58, 60 auf. Die konvex ausgebildeten Enden 58, 60 der Führungseinheit 14 sind an zwei sich abgewandten Seiten der Führungseinheit 14 angeordnet. Der Schneidstrang 12 wird mittels der Führungseinheit 14 geführt. Hierzu weist die Führungseinheit 14 zumindest ein Führungselement 62 (Figur 7) auf, mittels dessen der Schneidstrang 12 geführt wird. Das Führungselement 62 ist hierbei als Führungsnut 64 ausgebildet, die sich in einer Schneidebene des Schneidstrangs 12 entlang eines gesamten Umfangs der Führungseinheit 14 erstreckt. Hierbei wird der Schneidstrang 12 mittels die Führungsnut 64 begrenzende Randbereiche der Führungseinheit 14 geführt. Es ist jedoch auch denkbar, dass das Führungselement 62 in einer anderen, einem Fachmann als sinnvoll erscheinenden Art und Weise, wie beispielsweise als rippenartige Anformung an der Führungseinheit 14, die in eine Ausnehmung an dem Schneidstrang 12 eingreift, ausgebildet ist. Der Schneidstrang 12 wird, in einer senkrecht zur Schneidebene verlaufenden Ebene betrachtet, von drei Seiten von den die Führungsnut 64 begrenzenden Randbereiche umgeben (Figur 7). Der Schneidstrang 12 wird während eines Betriebs umlaufend entlang des Umfangs in der Führungsnut 64 relativ zur Führungseinheit 14 bewegt.

Des Weiteren weist die Werkzeugmaschinentrennvorrichtung 10 ein mittels der Führungseinheit 14 zumindest teilweise gelagertes Drehmomentübertragungselement 36 zum Antrieb des Schneidstrangs 12 auf. Hierbei weist das Drehmomentübertragungselement 36 eine Kopplungsausnehmung 66 auf, die in einem montierten Zustand mit dem verzahnten Ende 130 der Abtriebswelle 128 koppelbar ist. Es ist jedoch auch denkbar, dass das Drehmomentübertragungselement 36 in einem gekoppelten Zustand zum Antrieb des Schneidstrangs 12 direkt mit dem Ritzel 124 der Motoreinheit 18 und/oder dem Zahnrad 126 der Getriebeeinheit 32 gekoppelt ist. Die Kopplungsausnehmung 66 ist konzentrisch im Drehmomentübertragungselement 36 angeordnet. Die Kopplungsausnehmung 66 ist als Innensechskant ausgebildet. Es ist jedoch auch denkbar, dass die Kopplungsausnehmung 66 eine andere, einem Fachmann als sinnvoll erscheinende Ausgestaltung aufweist.

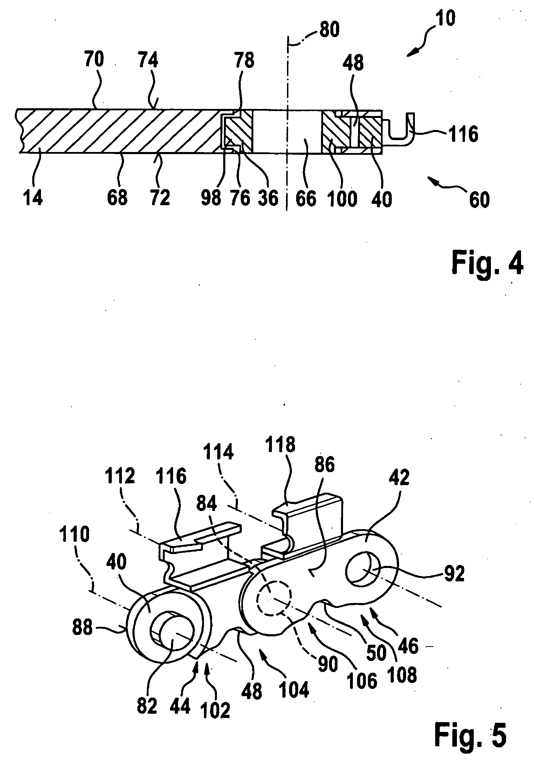

In einem ungekoppelten Zustand ist das Drehmomentübertragungselement 36 quer zur Schneidrichtung 38 des Schneidstrangs 12 und/oder entlang der Schneidrichtung 38 in der Führungseinheit 14 beweglich angeordnet (Figur 4). Hierbei ist das Drehmomentübertragungselement 36 zumindest teilweise zwischen zwei Außenwänden 68, 70 der Führungseinheit 14 angeordnet. Die Außenwände 68, 70 verlaufen zumindest im Wesentlichen parallel zur Schneidebene des Schneidstrangs 12. Die Führungseinheit 14 weist in Außenflächen 72, 74 der Außenwände 68, 70 jeweils eine Ausnehmung 76, 78 auf, in der das Drehmomentübertragungselement 36 zumindest teilweise angeordnet ist.

Das Drehmomentübertragungselement 36 ist mit einem Teilbereich in den Ausnehmungen 76, 78 der Außenwände 70, 72 angeordnet. Das Drehmomentübertragungselement 36 weist hierbei zumindest in dem in den Ausnehmungen 76, 78 angeordneten Teilbereich eine Erstreckung entlang einer Rotationsachse 80 des Drehmomentübertragungselements 36 auf, die bündig mit einer der Außenflächen 72, 74 der Führungseinheit 14 abschließt. Ferner weist der in den Ausnehmungen 76, 78 der Außenflächen 72, 74 der Führungseinheit 14 angeordnete Teilbereich des Drehmomentübertragungselements 36 eine sich zumindest im Wesentlichen senkrecht zur Rotationsachse 80 des Drehmomentübertragungselements 36 erstreckende Außenabmessung auf, die zumindest 0,1 mm kleiner ist als eine sich zumindest im Wesentlichen senkrecht zur Rotationsachse 80 des Drehmomentübertragungselements 36 erstreckende Innenabmessung der Ausnehmungen 76, 78. Der in den Ausnehmungen 76, 78 angeordnete Teilbereich des Drehmomentübertragungselements 36 ist entlang einer senkrecht zur Rotationsachse 80 verlaufenden Richtung jeweils beabstandet zu einem die jeweilige Ausnehmung 76, 78 begrenzenden Rand der Außenwände 70, 72. Somit weist der in den Ausnehmungen 76, 78 angeordnete Teilbereich des Drehmomentübertragungselements 36 ein Spiel innerhalb der Ausnehmungen 76, 78 auf.

Figur 5 zeigt eine Detailansicht von Schneidenträgerelementen 40, 42 des Schneidstrangs 12 der Werkzeugmaschinentrennvorrichtung 10. Der Schneidstrang 12 umfasst eine Vielzahl miteinander verbundener Schneidenträgerelemente 40, 42, die jeweils mittels eines Verbindungselements 82, 84 des Schneidstrangs 12 miteinander verbunden sind, das zumindest im Wesentlichen bündig mit einer von zwei Außenflächen 86, 88 eines der miteinander verbundenen Schneidenträgerelemente 40, 42 abschließt (vgl. auch Figur 7). Die Verbindungselemente 82, 84 sind bolzenförmig ausgebildet. Die Außenflächen 86, 88 verlaufen in einem in der Führungsnut 64 angeordneten Zustand des Schneidstrangs 12 zumindest im Wesentlichen parallel zur Schneidebene des Schneidstrangs 12. Ein Fachmann wird je nach Anwendungsfall eine für den Schneidstrang 12 geeignete Anzahl an Schneidenträgerelementen 40, 42 auswählen. Die Schneidenträgerelemente 40, 42 sind jeweils einstückig mit einem der Verbindungselemente 82, 84 ausgebildet. Ferner weisen die Schneidenträgerelemente 40, 42 jeweils eine Verbindungsausnehmung 90, 92 zur Aufnahme eines der Verbindungselemente 82, 84 der miteinander verbundenen Schneidenträgerelemente 40, 42 auf. Die Verbindungselemente 82, 84 sind mittels der Führungseinheit 14 geführt (Figur 7). Hierbei sind die Verbindungselemente 82, 84 in einem montierten Zustand des Schneidstrangs 12 in der Führungsnut 64 angeordnet. Die Verbindungselemente 82, 84 können sich, in einer senkrecht zur Schneidebene verlaufenden Ebene betrachtet, an zwei Seitenwänden 94, 96 der Führungsnut 64 abstützen. Die Seitenwände 94, 96 begrenzen die Führungsnut 64 entlang einer senkrecht zur Schneidebene verlaufenden Richtung. Ferner erstrecken sich die Seitenwände 94, 96 der Führungsnut 64, in der Schneidebene betrachtet, ausgehend von der Führungseinheit 14 senkrecht zur Schneidrichtung 38 des Schneidstrangs 12 nach außen.

Die Schneidenträgerelemente 40, 42 des Schneidstrangs 12 weisen jeweils eine Ausnehmung 48, 50 auf, die jeweils in einem montierten Zustand auf einer dem Drehmomentübertragungselement 36 zugewandten Seite 44, 46 des jeweiligen Schneidenträgerelements 40, 42 angeordnet ist. Das Drehmomentübertragungselement 36 greift in zumindest einem Betriebszustand zum Antrieb des Schneidstrangs 12 in die Ausnehmungen 48, 50 ein. Das Drehmomentübertragungselement 36 ist hierbei als Zahnrad ausgebildet. Somit umfasst das Drehmomentübertragungselement 36 Zähne 98, 100, die dazu vorgesehen sind, in zumindest einem Betriebszustand zum Antrieb des Schneidstrangs 12 in die Ausnehmungen 48, 50 der Schneidenträgerelemente 40, 42 einzugreifen. Ferner sind die dem Drehmomentübertragungselement 36 zugewandten Seiten 44, 46 der Schneidenträgerelemente 40, 42 kreisbogenförmig ausgebildet. Die dem Drehmomentübertragungselement 36 in einem montierten Zustand zugewandten Seiten 44, 46 der Schneidenträgerelemente 40, 42 sind jeweils in Teilbereichen 102, 104, 106, 108, zwischen einer Mittelachse 110 des jeweiligen Verbindungselements 82, 84 und einer Mittelachse 112, 114 der jeweiligen Verbindungsausnehmung 90, 92 betrachtet, kreisbogenförmig ausgestaltet. Die kreisbogenförmigen Teilbereiche 102, 104, 106, 108 sind jeweils angrenzend an die Ausnehmungen 48, 50, in die das Drehmomentübertragungselement 36 eingreift, ausgebildet. Hierbei weisen die kreisbogenförmigen Teilbereiche 102, 104, 106, 108 einen Radius auf, der einem Radius eines Verlaufs der Führungsnut 64 an den konvexen Enden 58, 60 entspricht. Die Teilbereiche 102, 104, 106, 108 sind konkav ausgebildet (Figur 6).

Ferner weist der Schneidstrang 12 Schneidelemente 116, 118 auf. Die Schneidelemente 116, 118 sind jeweils einstückig mit einem der Schneidenträgerelemente 40, 42 ausgebildet. Eine Anzahl der Schneidelemente 116, 118 ist abhängig von einer Anzahl an Schneidenträgerelementen 40, 42. Ein Fachmann wird je nach Anzahl an Schneidenträgerelementen 40, 42 eine geeignete Anzahl an Schneidelementen 116, 118 auswählen. Die Schneidelemente 116, 118 sind dazu vorgesehen, ein Abtrennen und/oder ein Abtragen von Werkstoffteilchen eines zu bearbeitenden Werkstücks (hier nicht näher dargestellt) zu ermöglichen. Die Schneidelemente 116, 118 können beispielsweise als Vollmeißel, Halbmeißel oder andere, einem Fachmann als sinnvoll erscheinende Schneidenarten ausgebildet sein, die dazu vorgesehen sind, ein Abtrennen und/oder ein Abtragen von Werkstoffteilchen eines zu bearbeitenden Werkstücks zu ermöglichen. Der Schneidstrang 12 ist endlos ausgebildet. Somit ist der Schneidstrang 12 als Schneidkette ausgebildet. Die Schneidenträgerelemente 40, 42 sind hierbei als Kettenglieder ausgebildet, die mittels der bolzenförmigen Verbindungselemente 82, 84 miteinander verbunden sind. Es ist jedoch auch denkbar, dass der Schneidstrang 12, die Schneidenträgerelemente 40, 42 und/oder die Verbindungselemente 82, 84 in einer anderen, einem Fachmann als sinnvoll erscheinenden Art und Weise ausgestaltet sind.

## Patentansprüche

1. Werkzeugmaschinensystem mit zumindest einer Werkzeugmaschinentrennvorrichtung, die zumindest einen Schneidstrang (12) und zumindest eine Führungseinheit (14), die zumindest zusammen mit dem Schneidstrang (12) ein geschlossenes System bildet, umfasst, und mit zumindest einer tragbaren Werkzeugmaschine, die eine mit dem Schneidstrang (12) koppelbare Motoreinheit (18) aufweist, wobei in einem montierten Zustand eine Motoreinheitslängsachse (20) der Motoreinheit (18) zumindest im Wesentlichen senkrecht zu einer Längsachse (22) der Führungseinheit (14) verläuft, **dadurch gekennzeichnet, dass** die tragbare Werkzeugmaschine eine Getriebeeinheit (32) aufweist, die als Winkelgetriebe (34) ausgebildet ist, wobei die tragbare Werkzeugmaschine zumindest eine Auflageeinheit (24) zur Auflage auf ein Werkstück aufweist, durch die sich die Längsachse (22) der Führungseinheit (14) in einem montierten Zustand zumindest im Wesentlichen senkrecht zumindest zu einer Auflagefläche (26, 28) der Auflageeinheit (24) hindurch erstreckt, wobei die Motoreinheitslängsachse (20) der Motoreinheit (18) und die Längsachse (22) der Führungseinheit (14) in einem montierten Zustand zumindest im Wesentlichen in einer gemeinsamen Ebene (30) angeordnet sind und wobei die Motoreinheit (18) entlang der Motoreinheitslängsachse (20) eine maximale Abmessung aufweist.

2. Werkzeugmaschinensystem nach Anspruch 1,
**dadurch gekennzeichnet, dass** die Werkzeugmaschinentrennvorrichtung ein Drehmomentübertragungselement (36) aufweist, das zumindest teilweise in der Führungseinheit (14) gelagert ist.

3. Werkzeugmaschinensystem nach Anspruch 2,
**dadurch gekennzeichnet, dass** das Drehmomentübertragungselement (36) zumindest in einem ungekoppelten Zustand zumindest quer zu einer Schneidrichtung (38) des Schneidstrangs (12) und/oder entlang der Schneidrichtung (38) in der Führungseinheit (14) beweglich angeordnet ist.

4. Werkzeugmaschinensystem nach einem der vorhergehenden Ansprüche,
**dadurch gekennzeichnet, dass** der Schneidstrang (12) zumindest ein Schneidenträgerelement (40, 42) aufweist, das auf einer einem Drehmomentübertragungselement (36) der Werkzeugmaschinentrennvorrichtung zugewandten Seite (44, 46) des Schneidenträgerelements (40, 42) zumindest eine Ausnehmung (48, 50) aufweist, in die das Drehmomentübertragungselement (36) in zumindest einem Betriebszustand zum Antrieb des Schneidstrangs (12) eingreift.

5. Werkzeugmaschinensystem nach Anspruch 4,
**dadurch gekennzeichnet, dass** das Schneidenträgerelement (40, 42) zumindest auf der dem Drehmomentübertragungselement (36) zugewandten Seite (44, 46) zumindest im Wesentlichen kreisbogenförmig ausgebildet ist.

## Claims

1. Machine-tool system having at least one machine-tool parting device which comprises at least one cutting strand (12) and at least one guide unit (14) which forms a self-contained system at least together with the cutting strand (12), and having at least one portable machine tool which has a motor unit (18) that can be coupled to the cutting strand (12), wherein, in a mounted state, a motor unit longitudinal axis (20) of the motor unit (18) runs at least substantially perpendicular to a longitudinal axis (22) of the guide unit (14),
**characterized in that** the portable machine tool has a gearing unit (32) which is in the form of an angular gearing (34), wherein the portable machine tool has at least one support unit (24) for support on a workpiece, the longitudinal axis (22) of the guide unit (14) in a mounted state extending through said support unit at least substantially perpendicularly at least with respect to a support surface (26, 28) of the support unit (24), wherein the motor unit longitudinal axis (20) of the motor unit (18) and the longitudinal axis (22) of the guide unit (14) in a mounted state are arranged at least substantially in a common plane (30), and wherein the motor unit (18) has a maximum dimension along the motor unit longitudinal axis (20).

2. Machine-tool system according to Claim 1,
**characterized in that** the machine-tool parting device has a torque transmission element (36) which is mounted at least partially in the guide unit (14).

3. Machine-tool system according to Claim 2,
**characterized in that** the torque transmission element (36), at least in an uncoupled state, is arranged in the guide unit (14) so as to be movable at least transversely with respect to a cutting direction (38) of the cutting strand (12) and/or along the cutting direction (38).

4. Machine-tool system according to one of the preceding claims,
**characterized in that** the cutting strand (12) has at least one cutter carrier element (40, 42) which, on a side (44, 46), facing towards a torque transmission element (36) of the machine-tool parting device, of the cutter carrier element (40, 42), has at least one recess (48, 50) into which, in at least one operating state, the torque transmission element (36) engages for the purpose of driving the cutting strand (12).

5. Machine-tool system according to Claim 4, **characterized in that** the cutter carrier element (40, 42) is of at least substantially circular-arc-shaped form at least on the side (44, 46) facing towards the torque transmission element (36).

## Revendications

1. Système de machine-outil comprenant au moins un dispositif de coupe de machine-outil qui comprend au moins un tronçon de coupe (12) et au moins une unité de guidage (14) qui, au moins conjointement avec le tronçon de coupe (12), forme un système fermé, et comprenant au moins une machine-outil portative qui présente une unité motorisée (18) pouvant être accouplée au tronçon de coupe (12), un axe longitudinal d'unité motorisée (20) de l'unité motorisée (18), dans un état monté; s'étendant au moins sensiblement perpendiculairement à un axe longitudinal (22) de l'unité de guidage (14), **caractérisé en ce que** la machine-outil portative présente une unité d'engrenage (32) qui est réalisée sous forme d'engrenage à pignons coniques (34), la machine-outil portative présentant au moins une unité d'appui (24) destinée à s'appuyer contre une pièce, à travers laquelle unité d'appui, dans un état monté, s'étend l'axe longitudinal (22) de l'unité de guidage (14) au moins sensiblement perpendiculairement au moins à une surface d'appui (26, 28) de l'unité d'appui (24), l'axe longitudinal d'unité motorisée (20) de l'unité motorisée (18) et l'axe longitudinal (22) de l'unité de guidage (14), dans un état monté, étant disposés au moins sensiblement dans un plan commun (30) et l'unité motorisée (18) présentant une dimension maximale le long de l'axe longitudinal d'unité motorisée (20).

2. Système de machine-outil selon la revendication 1, **caractérisé en ce que** le dispositif de coupe de machine-outil présente un élément de transfert de couple (36) qui est supporté au moins en partie dans l'unité de guidage (14).

3. Système de machine-outil selon la revendication 2, **caractérisé en ce que** l'élément de transfert de couple (36), au moins dans un état désaccouplé, est disposé de manière déplaçable au moins transversalement à une direction de coupe (38) du tronçon de coupe (12) et/ou le long de la direction de coupe (38) dans l'unité de guidage (14).

4. Système de machine-outil selon l'une quelconque des revendications précédentes, **caractérisé en ce que** le tronçon de coupe (12) présente au moins un élément de support de lame de coupe (40, 42) qui présente, sur un côté (44, 46) de l'élément de support de lame de coupe (40, 42) tourné vers un élément de transfert de couple (36) du dispositif de coupe de machine-outil, au moins un évidement (48, 50) dans lequel l'élément de transfert de couple (36) s'engage dans au moins un état de fonctionnement en vue de l'entraînement du tronçon de coupe (12).

5. Système de machine-outil selon la revendication 4, **caractérisé en ce que** l'élément de support de lame de coupe (40, 42) est réalisé, au moins du côté (44, 46) tourné vers l'élément de transfert de couple (36), au moins sensiblement sous forme d'arc de cercle.
